# EUROPÄISCHE PATENTSCHRIFT

(11) **EP 0 534 994 B1**
(45) Veröffentlichungstag und Bekanntmachung des Hinweises auf die Patenterteilung: **23.08.1995**
(21) Anmeldenummer: 91909406.0
(22) Anmeldetag: 25.05.1991
(51) Int. Cl.: A23G 3/02, A23G 3/04, A23G 3/00

(54) **VERFAHREN UND VORRICHTUNG ZUM KONTINUIERLICHEN HERSTELLEN EINER HARTBONBONMASSE**
PROCESS AND DEVICE FOR THE CONTINUOUS PRODUCTION OF A HARD SWEET COMPOUND
PROCEDE ET DISPOSITIF POUR LA FABRICATION EN CONTINU D'UNE PATE A BONBONS DURS

(30) Priorität: 22.06.1990 DE 4019916
(43) Veröffentlichungstag der Anmeldung: 07.04.1993
(73) Patentinhaber: ROBERT BOSCH GMBH, 70442 Stuttgart (DE)
(72) Erfinder: GUSE, Otto, D-4060 Viersen 12 (DE); JUNG, Paul, Werner, D-4050 Mönchengladbach 1 (DE); LIESER, Alfred, D-4060 Viersen 12 (DE)
(86) Internationale Anmeldenummer: DE9100438
(87) Internationale Veröffentlichungsnummer: WO9200016

(56) Entgegenhaltungen:
- EP-A- 0 348 696
- DE-C- 820 843
- US-A- 4 913 924

## Beschreibung

### Stand der Technik

Die Erfindung geht aus von einem Verfahren zum Herstellen einer Hartbonbonmasse nach der Gattung des Anspruchs 1. In neuerer Zeit geht der Trend bei Bonbons auf die Verwendung von Zuckeraustauschstoffen wie Sorbit, Maltit, Lycasin, Palatinit® u.a. anstelle von Zucker (Saccharose). Bonbons aus diesen zuckerähnlichen Austauschstoffen sind jedoch nur haltbar, wenn sie einen sehr niedrigen Restwassergehalt von 1 % und weniger aufweisen. Um dieses Ziel zu erreichen, ist eine Kochtemperatur der wässrigen Lösung im Bereich von 150 bis 165^{o} C erforderlich. Bei dem an das Kochen der Lösung anschließenden Verdampfungsprozess des Lösungswassers unter Unterdruck sinkt bei herkömmlichen Hartbonbonmasse-Herstellanlagen die Temperatur der Lösung etwa um 25 Grad. Da in einem Temperaturbereich von 130 bis 140^{o} C die der Bonbonmasse zuzugebenden Süßstoffe sich zersetzen oder zerstört werden, muß die Bonbonmasse zunächst auf nachgeschalteten Kühltrommeln oder Kühlbändern gekühlt werden. Dies bedeutet, daß bei einem Wechsel in der Verarbeitung von Zucker und Zuckeraustauschstoffen auf herkömmlichen Anlagen der an die Austrageinrichtung des Vakuumraums anschließende Mischer zu versetzen ist. Es sind daher ein Verfahren und eine Vorrichtung erstrebenswert, bei denen sowohl Zucker als auch Zuckeraustauschstoffe ohne große Umstellungen verarbeitet werden können.

Aus der DE-PS 38 21 505 ist zwar ein Verfahren zum Herstellen von Bonbonmassen aus Zuckeraustauschstoffen bekannt, bei dem die Lösung von Zuckeraustauschstoffen, um die Temperatur niedrig zu halten, bereits unter Unterdruck gekocht wird. Da hierbei das Lösungswasser zum größten Teil schon beim Kochen entfernt wird, läßt sich die Temperatur durch nachträgliches Ausdampfen nur noch unwesentlich absenken.

### Vorteile der Erfindung

Das erfindungsgemäße Verfahren mit den kennzeichnenden Merkmalen des Anspruchs 1 hat den Vorteil, daß die Lösung während des Ausdampfens des Lösungswassers auf eine für das Zumischen von Zusatzstoffen geeignete Temperatur gekühlt wird, so daß der Produktionsproszess kontinuierlich weitergeführt werden kann. Eine Vorrichtung zum Durchführen des erfindungsgemäßen Verfahrens nach einem der Ansprüche 1 bis 3 mit den Merkmalen des Anspruchs 4 hat den Vorteil, daß durch den Kontaktwärmetausch eine schnelle Rückkühlung gegeben ist, die die Kühlung durch Verdampfung unterstützt. Ferner ist von wesentlichem Vorteil, daß die Kühleinrichtung ohne wesentlichen Aufwand zu- und abschaltbar ist, so daß auf der Vorrichtung ohne große Umstellarbeiten sowohl nach dem herkömmlichen Verfahren als auch nach dem neuen Verfahren Lösungen aus Zucker oder aus Zuckeraustauschstoffen verarbeitet werden können.

### Beschreibung des Ausführungsbeispiels

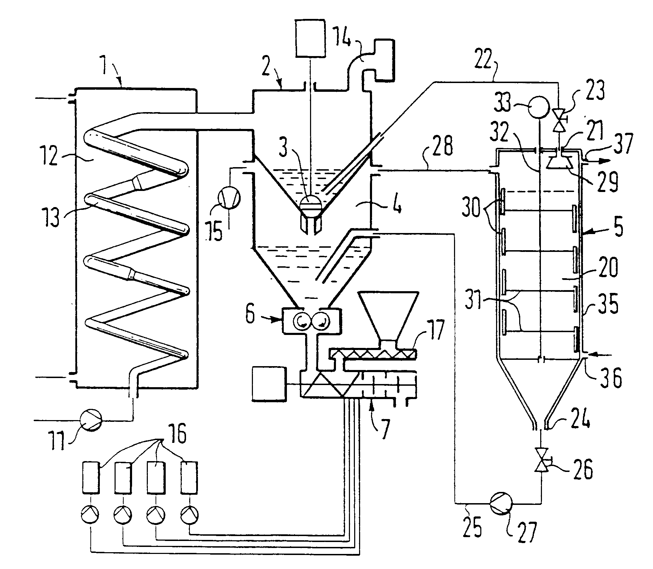

In der Zeichnung ist eine Vorrichtung zum Herstellen von Bonbonmassen vereinfacht dargestellt und im folgenden wird das erfindungsgemäße Verfahren zum Herstellen von Bonbonmassen anhand dieses Ausführungsbeispiels erläutert. Die Vorrichtung hat einen Durchlauferhitzer 1, einen diesem nachgeschalteten Ausdampfraum 2, einen daran über ein Überströmventil 3 anschließenden Vakuumraum 4, eine zu dem Überströmventil 3 im Nebenschluß geschaltete Kühleinrichtung 5, eine am Auslaß des Vakuumraums 4 angeordnete Austrageinrichtung 6 und einen Mischer 7. Die aus den Grundstoffen Zucker oder Zuckeraustauschstoff und Wasser vorbereitete Lösung wird zunächst mittels einer Pumpe 11 durch eine in einem Dampfraum 12 befindliche Rohrschlange 13 des Durchlauferhitzers 1 gepumpt, wobei der Lösung die für das Verdampfen des Wassers erforderliche Verdampfungswärme zugeführt und die Lösung auf mindestens die Verdampfungstemperatur erhitzt wird. Die dabei auf 140 bis 146^{o} C erhitzte Zuckerlösung oder die auf 155 bis 165^{o} C erhitzte Lösung aus Zuckeraustauschstoff, die einen Wassergehalt von ca. 20 % hat, strömt aus der Rohrschlange 13 in den Ausdampfraum 2, in dem atmosphärischer Druck herrscht. Dort verdampft ein Teil des Wassers, wobei die Temperatur der Losung sinkt; der Dampf entweicht über einen Brüdenabzug 14. Bei Verwendung von Zucker als Grundstoff fließt die Lösung durch das druckgeregelte Überströmventil 3 in den darunter befindlichen Vakuumraum 4. Mittels einer Vakuumpumpe 15 wird im Vakuumraum 4 ein Unterdruck von ca. 50 mbar erzeugt, bei dem die Lösung auf einen Restwassergehalt von weniger als 1 % ausgedampft wird und wobei sie sich abkühlt. Die Masse wird von der Austrageinrichtung 6 aus dem Vakuumraum 4 abgezogen und gelangt in den Mischer 7, in dem flüssige oder pulverige, aus Dosiergeräten 16 bzw. 17 zugeführte Aroma- und/oder Süßstoffe in die Masse eingemischt werden, bevor die Masse zur Weiterverarbeitung zu Hartkaramellen den Mischer 7 verläßt.

Im Falle der Verwendung von Zuckeraustauschstoff als Grundstoff für die Bonbonmasse, die aufgrund ihrer physikalischen Eigenschaften eine Siedetemperatur von 155 bis 165^{o} C erforderlich machen, wird die gekochte Lösung zusätzlich in der zuschaltbaren Kühleinrichtung 5, in deren Innenraum ein Unterdruck herrscht, auf eine Temperatur von 110 Grad C gekühlt. Dazu ist der Einlaß 21 des Vakuum- oder Kühlraums 20 der Kühleinrichtung 5 über eine Leitung 22 und ein Ventil 23 sowie der Auslaß 24 über eine Leitung 25, ein Ventil 26 und eine Pumpe 27 mit dem unteren Teil des Vakuumraums 4 verbunden, in dem sich die Masse sammelt. Ferner ist der Kühlraum 20 der Kühleinrichtung 5 über ein Leitung 28 mit dem oberen Teil des Vakuumraums 4 verbunden, so daß im Kühlraum 20 der gleiche Unterdruck wie im Vakuumraum 4 herrscht. Bei geschlossenem Überströmventil 3 und bei geöffnetem Einlaß-Ventil 23 wird durch das Druckgefälle zwischen dem Ausdampfraum 2 und dem Kühlraum 20 durch die in den unteren Teil des Ausdampfraums 2 eintauchende Leitung 22 dort angesammelte erhitzte Lösung abgesaugt und durch eine Verteilerdüse 29 im Kühlraum 20 auf dessen Innenwandung im oberen Abschnitt verteilt, von wo sie aufgrund der Schwerkraft an der Innenwandung nach unten abläuft. Schaberartige Verteilerelemente 30, die mit geringem Abstand zur zylindrischen Innenwandung des Kühlraums 20 umlaufen, erteilen der an der Wand des Kühlraums 20 nach unten fließenden Lösung eine Umlaufkomponente, so daß mit der gekühlten Wandung des Kühlraums 20 ein intensiver Wärmeaustausch stattfindet. Die mit einer Temperatur von etwa 140 Grad in den Kühlraum 20 zugeführte Lösung gibt im wesentlichen durch Wärmeleitung Wärme an die gekühlte Wandung der Kühleinrichtung 5 ab. Ferner verdampft im Kühlraum 20 unter dem Einfluß des dort herrschenden Unterdrucks das Lösungswasser der Lösung bis auf einen Restwassergehalt von weniger als 1 %. Die sich schließlich im unteren Teil des Kühlraums 20 sammelnde Masse hat eine Temperatur von 110 Grad. Von dort fördert die Pumpe 27 die Masse bei geöffnetem Ventil 26 durch die Leitung 25 in den Vakuumraum 4, von wo die Austrageinrichtung sie dem Mischer 7 zuführt.

Die umlaufenden Verteilerelemente 30 sind über radiale Arme 31 an einer zentral im Kühlraum 20 verlaufenden Welle 32 befestigt, die von einem Motor 33 kontinuierlich angetrieben wird. Der Kühlraum 20 ist von einem doppelwandigen Mantel 35 umgeben, der über einen Einlaß 36 und einen Auslaß 37 von einem Kühlmedium, beispielsweise Wasser, durchflossen ist.

Aus dem oben dargelegten geht hervor, daß die beschriebene und vereinfacht dargestellte Vorrichtung sowohl zum Herstellen von Bonbonmassen aus Zucker als auch aus Zuckeraustauschstoffen einsetzbar ist; zum Umstellen auf die eine oder andere Herstellungsart sind lediglich einige Handgriffe durchzuführen. Ferner wird darauf hingewiesen, daß die einzelnen Einrichtungen mit Druck- und Temperaturfühlern ausgerüstet sind, welche die gemessenen Werte anzeigen und diese zum Durchführen des Verfahrens in einem Prozeßsteuer- und regelsystem verarbeitet werden. Schließlich wird bemerkt, daß es im Rahmen der Erfindung möglich ist, die Kühleinrichtung mit dem Vakuumraum zu einer Einheit zusammenzufassen, so daß die Lösung aus dem Ausdampfraum direkt über das Überstromventil in den vakuumierten Kühlraum gelangt, wo sie unter Unterdruck und unter intensiver Kühlung ausdampft und dann von der Austrageinrichtung dem Mischer zugeführt wird.

## Patentansprüche

1. Verfahren zum kontinuierlichen Herstellen einer Hartbonbonmasse aus einer wässrigen Lösung von Zuckeraustauschstoffen, bei dem die Lösung zunächst gekocht, darauf unter Unterdruck unter Abkühlung ausgedampft und schließlich mit Zusatzstoffen versetzt wird, dadurch gekennzeichnet, daß die gekochte Lösung während des Ausdampfens unter Unterdruck zusätzlich durch Wärmeleitung gekühlt wird.

2. Verfahren nach Anspruch 1, dadurch gekennzeichnet, daß die Lösung in Kontakt mit einer gekühlten Wand gekühlt wird.

3. Verfahren nach Anspruch 2, dadurch gekennzeichnet, daß die Lösung auf der gekühlten Wand mit Verteilerelementen in Bewegung gehalten wird.

4. Vorrichtung zum Durchführen des Verfahrens nach Anspruch 1 zum Herstellen einer Hartbonbonmasse mit einem die Lösung bis auf ihre Verdampfungstemperatur erhitzenden und auch die Verdampfungswärme zuführenden Durchlauferhitzer, mit einem daran anschließenden Ausdampfraum, mit einem über ein Überströmventil mit dem Ausdampfraum verbundenen, unter Unterdruck stehenden Vakuumraum, und mit einer über eine Austrageinrichtung aus dem Vakuumraum beschickte Mischeinrichtung für Zusatzstoffe, dadurch gekennzeichnet, daß die von der erhitzten Lösung bedeckte Wandung des Vakuumraums (20) mit einer Kühleinrichtung ausgerüstet ist.

5. Vorrichtung nach Anspruch 4, dadurch gekennzeichnet, daß die Wandung des gekühlten Vakuumraums (20) von Verteilerelementen (30) bestrichen wird.

6. Vorrichtung nach Anspruch 4 oder 5, dadurch gekennzeichnet, daß der gekühlte Vakuumraum (20) an einen mit dem Ausdampfraum (2) verbundenen Vakuumraum (4) verbindbar ist.

7. Vorrichtung nach Anspruch 6, dadurch gekennzeichnet, daß sich der Vakuumraum (4) über das Überströmventil (3) an den Ausdampfraum (2) anschließt, an dessen Auslaß die Austrageinrichtung (6) angeordnet ist, daß der Innenraum des gekühlten Vakuumraums (20) durch eine Leitung (28) mit dem Vakuumraum (4) verbunden ist, und daß der Einlaß des Innenraums der Kühleinrichtung (20) doch eine Leitung (22) mit dem Ausdampfraum (2) und der Auslaß des Innenraums durch eine Leitung (25) mit einer Pumpe (27) mit dem Vakuumraum (4) verbunden ist.

8. Vorrichtung nach 7, dadurch gekennzeichnet, daß in den Leitungen (22, 25) Absperrventile (23, 26) angeordnet sind.

9. Vorrichtung nach einem der Ansprüche 4 bis 8, dadurch gekennzeichnet, daß die gekühlte Innenwand des gekühlten Vakuumraums zylindrisch ist und daß darin umlaufende, die Wand bestreichende Verteilerelemente (30) angeordnet sind.

## Claims

1. Process for the continuous production of a hard-sweet compound from an aqueous solution of sugar substitutes, in which the solution is first boiled, thereupon steamed out under negative pressure with cooling and finally mixed with additives, characterized in that, during the steaming-out under negative pressure, the boiled solution is additionally cooled by heat conduction.

2. Process according to Claim 1, characterized in that the solution is cooled in contact with a cooled wall.

3. Process according to Claim 2, characterized in that the solution is kept in motion on the cooled wall by means of distributor elements.

4. Apparatus for carrying out the process according to Claim 1 for the production of a hard-sweet compound, having a flow heater heating the solution to its vaporization temperature and also supplying the heat of evaporation, having a steaming-out space downstream thereof, having a vacuum space which is connected to the steaming-out space via an overflow valve and which is under negative pressure, and having a mixing device for additives which is fed from the vacuum space via a discharge device, characterized in that the wall of the vacuum space (20) covered by the heated solution is equipped with a cooling device.

5. Apparatus according to Claim 4, characterized in that the wall of the cooled vacuum space (20) is swept by distributor elements (30).

6. Apparatus according to Claim 4 or 5, characterized in that the cooled vacuum space (20) can be connected to a vacuum space (4) connected to the steaming-out space (2).

7. Apparatus according to Claim 6, characterized in that the vacuum space (4) is connected via the overflow valve (3) to the steaming-out space (2), at the outlet of which the discharge device (6) is arranged, in that the interior of the cooled vacuum space (20) is connected to the vacuum space (4) by means of a conduit (28), and in that the inlet of the interior of the cooling device (20) is connected to the steaming-out space (2) by means of a conduit (22) and the outlet of the interior is connected to the vacuum space (4) by means of a conduit (25) having a pump (27).

8. Apparatus according to Claim 7, characterized in that shut-off valves (23, 26) are arranged in the conduits (22, 25).

9. Apparatus according to one of Claims 4 to 8, characterized in that the cooled inner wall of the cooled vacuum space is cylindrical, and in that distributor elements (30) are arranged therein which rotate and sweep the wall.

## Revendications

1. Procédé de fabrication en continu d'une masse de bonbons, dure, à partir d'une solution aqueuse de matière échangeant du sucre, selon lequel on cuit tout d'abord la solution puis on évapore, sous pression et refroidissement, et enfin on mélange des additifs, caractérisé en ce que la solution cuite est refroidie de manière complémentaire pendant l'évaporation, sous pression.

2. Procédé selon la revendication 1, caractérisé en ce qu'on refroidit la solution en contact avec une paroi refroidie.

3. Procédé selon la revendication 2, caractérisé en ce qu'on maintient la solution en mouvement sur la paroi refroidie avec des éléments distributeurs.

4. Procédé pour la mise en oeuvre du procédé selon la revendication 1, pour fabriquer une masse de bonbons dure, avec un dispositif de chauffage à passage qui chauffe la solution jusqu'à la température d'évaporation et qui fournit également la chaleur d'évaporation, avec une chambre de vaporisation adjacente, une chambre à vide, mise en dépression, reliée à la chambre d'évaporation par l'intermédiaire d'une soupape de débordement, ainsi qu'une installation de mélange pour additifs alimentée à partir de la chambre sous vide et par une installation de sortie, caractérisé en ce que la paroi de la chambre à vide (20) recouverte par la solution chauffée est équipée d'une installation de refroidissement.

5. Dispositif selon la revendication 4, caractérisé en ce que la paroi de la chambre sous vide (20), refroidie est balayée par des éléments distributeurs (30).

6. Dispositif selon la revendication 4 ou 5, caractérisé en ce que la chambre sous vide (20), refroidie, est reliée à une chambre sous vide (4), reliée à la chambre d'évaporation (2).

7. Dispositif selon la revendication 6, caractérisé en ce que la chambre sous vide (4) est reliée à la chambre d'évaporation (2) par l'intermédiaire de la soupape de débordement (3), et la sortie de la chambre d'évaporation comporte une installation d'évacuation et le volume intérieur de la chambre sous vide refroidie (20) est relié par une conduite (28) à la chambre sous vide (4) et l'entrée de la chambre de l'installation de refroidissement (20) est reliée par une conduite (22) à la chambre d'évaporation (2) et la sortie de la chambre intérieure est reliée par une conduite (25) à une pompe (27) à la chambre sous vide (4).

8. Dispositif selon la revendication 7, caractérisé en ce que les conduites (22, 25) comportent les vannes d'arrêt (23, 26).

9. Dispositif selon l'une des revendications 4 à 8, caractérisé en ce que la paroi intérieure refroidie de la chambre sous vide refroidie est cylindrique et contient des éléments distributeurs (30), en rotation, qui balayent la paroi.
